Europäisches Patentamt

European Patent Office

Office européen des brevets

(19)

(11) Numéro de publication : **0 207 104**
**B1**

(12) **FASCICULE DE BREVET EUROPÉEN**

(45) Date de publication du fascicule du brevet :
20.09.89

(51) Int. Cl.⁴ : **G 05 D  7/01**, **B 65 D  83/14**

(21) Numéro de dépôt : **86900045.5**

(22) Date de dépôt : **24.12.85**

(86) Numéro de dépôt international :
**PCT/CH 85/00182**

(87) Numéro de publication internationale :
**WO/8604163 (17.07.86 Gazette 86/17)**

(54) **REDUCTEUR-REGULATEUR DE PRESSION POUR LA DISTRIBUTION D'UN PRODUIT GAZEUX, LIQUIDE, VISQUEUX, PULVERULENT OU PATEUX.**

(30) Priorité : 28.12.84 CH 6213/84

(43) Date de publication de la demande :
07.01.87 Bulletin 87/02

(45) Mention de la délivrance du brevet :
20.09.89 Bulletin 89/38

(84) Etats contractants désignés :
AT BE CH DE FR GB IT LI NL SE

(56) Documents cités :
WO–A–82 /004 50
CH–A–  618 896
FR–A–  970 737
FR–A– 1 136 879
GB–A– 2 144 520

(73) Titulaire : **ETABLISSEMENTS TECHNOSPRAY**
**Aeulestrasse 38**
**FL-9490 Vaduz (LI)**

(72) Inventeur : **COMMENT, Paul**
**CH-2892 Courgenay**
**CH-2892 Courgenay (CH)**

(74) Mandataire : **Meylan, Robert Maurice et al**
**c/o BUGNION S.A. 10, route de Florissant Case**
**Postale 375**
**CH-1211 Genève 12 - Champel (CH)**

## Description

La présente invention a pour objet un réducteur-régulateur de pression pour la distribution d'un produit gazeux, liquide, visqueux, pulvérulent ou pâteux comprenant une entrée haute pression et une sortie basse pression, un corps muni d'un alésage cylindrique dans lequel sont montés deux pistons rigidement solidaires l'un de l'autre et munis de segments déformables élastiquement et un ressort travaillant en compression entre le front de l'alésage et l'un des pistons et maintenant, au repos, les pistons en butée contre une butée prévue en face de l'autre piston, un premier orifice radial débouchant entre les pistons et relié à la haute pression et un second orifice radial au niveau du segment de l'un des pistons constituant la sortie basse pression, la chambre formée entre l'autre piston et le fond de l'alésage étant reliée à la pression atmosphérique.

Un réducteur-régulateur de ce type est décrit dans le brevet CH 618 896. Dans ce réducteur-régulateur antérieur, l'orifice radial situé au niveau du segment de l'un des pistons est constitué par un trou cylindrique. Or, compte tenu du fonctionnement de ce réducteur-régulateur, fonctionnement par ailleurs surprenant et dont l'analyse a exigé du temps, la sensibilité du réducteur-régulateur de pression est très grande, c'est-à-dire qu'un infime déplacement du double piston entraîne une forte variation de pression, ce qui exige un réglage très délicat. Il s'ensuit qu'un montage en série est très difficile à réaliser.

La présente invention a principalement pour but de réduire la sensibilité d'un tel réducteur-régulateur de telle sorte qu'il puisse être monté en série sans qu'il soit nécessaire d'effectuer un ajustement de la position de repos du double piston.

A cet effet le réducteur-régulateur de pression selon l'invention est caractérisé par le fait que l'orifice situé au niveau du segment de l'un des pistons est constitué par au moins une fente longitudinale, la course des pistons en direction du ressort étant limitée par une butée de telle sorte que lorsque le piston correspondant est en butée contre cette butée, le passage entre la chambre centrale et la cavité à travers la fente longitudinale, n'est pas totalement fermé.

Cette modification a non seulement pour effet de permettre un montage en série sans réglage ultérieur, mais en outre de permettre de faire passer à travers le réducteur-régulateur non seulement un gaz, comme ceci était prévu dans le brevet CH 618 896, mais tout produit susceptible de s'écouler à travers un macro-orifice, c'est-à-dire aussi bien des produits liquides que des produits visqueux, pulvérulents ou même pâteux. Ce second avantage ouvre des possibilités nouvelles dans la distribution de produits divers et c'est pourquoi la présente invention a également pour but de monter le réducteur-régulateur de pression selon l'invention dans une tête de distribution destinée à être montée sur une enceinte contenant un produit sous pression et munie d'une valve, le réducteur-régulateur de pression étant monté directement en série avec la valve et étant traversé par le produit à distribuer.

Il a déjà été proposé de monter un réducteur-régulateur de pression dans une tête de distribution (CH-A-645070) mais le réducteur-régulateur utilisé dans cette exécution connue et très différent du réducteur-régulateur selon la présente invention.

La position du ressort dépend de l'utilisation du réducteur-régulateur de pression. Dans une utilisation telle que décrite dans le brevet CH 618896, le ressort sera monté en appui contre le piston coopérant avec l'orifice de sortie basse pression, comme décrit dans ce brevet, tandis que dans une utilisation dans une tête de distribution, le ressort sera monté en appui contre l'autre piston.

Selon une variante d'exécution économique, comprenant moins de pièces que le dispositif définit ci-dessus, le réducteur-régulateur de pression comprend un corps muni d'un alésage cylindrique dans lequel est monté un seul piston muni d'un segment déformable élastiquement et un ressort travaillant en compression contre le fond d'alésage et le piston et maintenant, au repos, le piston en butée contre une butée, l'alésage présentant un premier orifice axial débouchant du côté du piston opposé au ressort et relié à la haute pression, un orifice radial au niveau du segment du piston constituant la sortie basse pression et constitué par au moins, une saignée longitudinale ménagée dans la paroi de l'alésage et s'étendant de part et d'autre du segment, en position de repos du piston, la course du piston en direction du ressort étant limitée par une butée, de telle sorte que lorsque le piston est en butée contre cette butée, le passage à travers la saignée longitudinale, n'est pas totalement fermé. Cette variante d'exécution fonctionne sur le même principe que la forme d'exécution principale.

Le dessin annexé représente, à titre d'exemple, une forme d'exécution de l'invention.

La figure 1 est une vue en coupe axiale d'un réducteur-régulateur de pression monté dans une tête de distribution, en position de repos.

La figure 2 est une vue en coupe semblable à celle de la figure 1, représentant le piston repoussé totalement en arrière.

La figure 3 est une vue partielle en coupe selon III-III de la figure 1, sans le piston.

La figure 4 est une vue en coupe semblable à celle représentée à la figure 3, d'une variante d'exécution.

La figure 5 est une vue en coupe semblable à celle de la figure 3, d'une seconde variante d'exécution.

La figure 6 illustre quelques exemples d'embouts susceptibles d'être montés sur la tête de distribution.

La figure 7 est une vue en coupe axiale d'une variante d'exécution économique, en position de repos.

La figure 8 représente la même variante dans une position de travail.

La figure 9 représente le diagramme de la régulation de cette variante d'exécution.

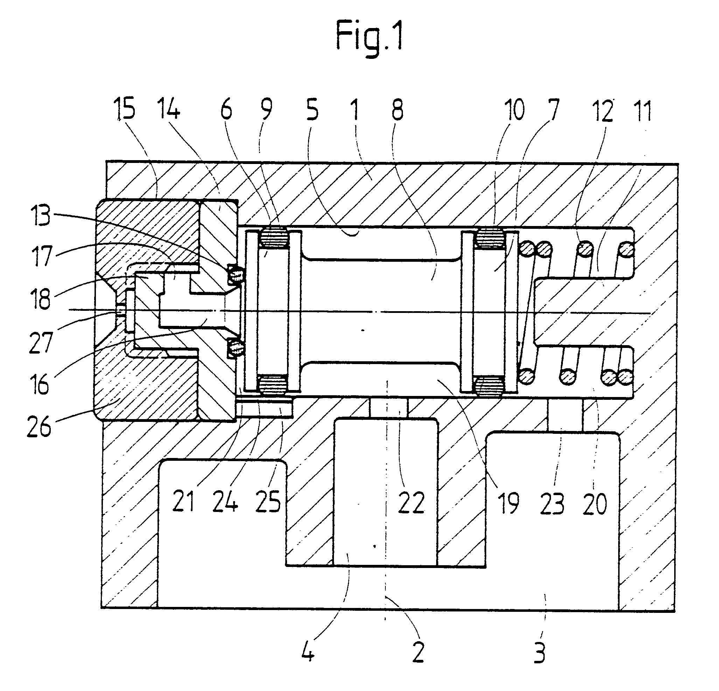

A la figure 1 est représentée une tête de distribution 1 de forme cylindrique d'axe 2. Cette tête représente une creusure cylindrique 3 destinée à venir coiffer une enceinte contenant un produit sous pression, par exemple une boîte cylindrique munie d'une valve susceptible d'être ouverte par une pression axiale. Ce type de valve est bien connu ; au milieu de la creusure 3, la tête 1 présente un embout 4 destiné à être fixé de façon étanche sur la valve de l'enceinte.

Dans la tête 1 est usiné un alésage 5 dans lequel sont montés deux pistons 6 et 7 reliés rigidement entre eux par un corps 8. Ces pistons sont munis d'une gorge dans laquelle est monté un segment 9, respectivement 10, élastiquement déformable, constitué par un O-ring. La distance entre le piston et l'alésage est supérieure à 0,1 mm de manière à permettre un très léger déplacement du piston par la seule déformation élastique des segments 9 et 10. L'alésage 5 ne traverse pas totalement la tête 1 et son fond présente une protubérance 11 servant de butée limitatrice de course au piston 7. Autour de cette protubérance 11 est logé un ressort 12 travaillant en compression et ayant tendance à maintenir le piston 6 en appui contre une garniture d'étanchéité 13 logée dans une rainure d'une pièce circulaire 14 montée de façon hermétique dans un logement cylindrique 15 prolongeant axialement l'alésage 5. Cette pièce 14 présente un canal axial 16 dont l'entrée, côté piston, est entourée par la garniture d'étanchéité 13 et qui débouche radialement en 17 sur une portée cylindrique 18 de la pièce 14.

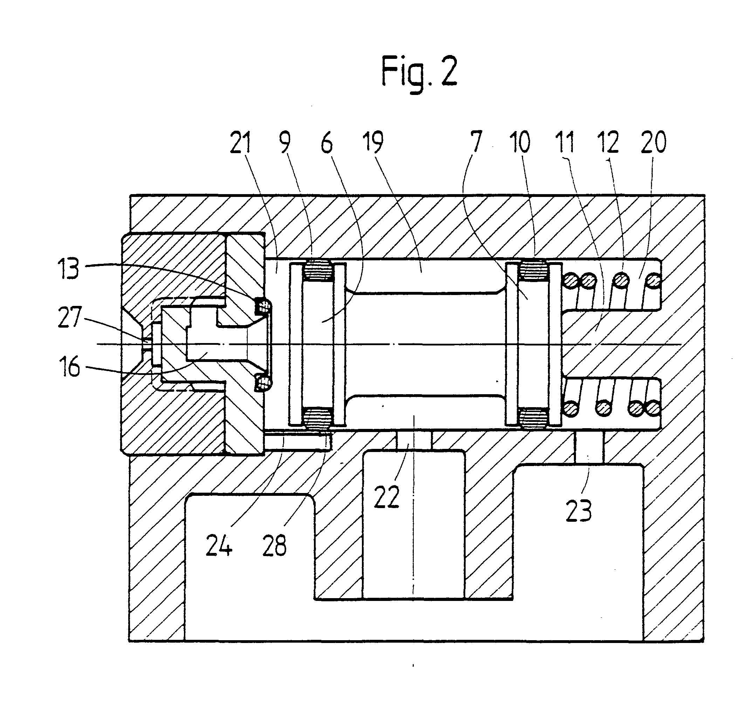

Les pistons 6 et 7 divisent l'alésage 5 en trois chambres, à savoir une chambre centrale 19 entre les pistons 6 et 7, une chambre arrière 20 contenant le ressort 12 et une chambre avant 21 devant le piston 6. La chambre centrale 19 communique par un orifice radial 22 avec la valve de l'enceinte contenant le produit sous pression. La chambre arrière 20 communique par un orifice radial 23 avec la pression atmosphérique. La chambre 21 est reliée à la chambre 19 par une fente étroite 24 s'étendant de part et d'autre du segment 9 en position de repos du piston et par une cavité 25 dans laquelle s'ouvre la fente 24. La fente 24 présente par exemple une largeur de 0,33 mm. La longueur de la fente 24 est telle que lorsque le double piston 6-7 est en butée contre la protubérance 11, il subsiste encore un passage extrêmement réduit entre la chambre 19 et la cavité 25, c'est-à-dire la chambre 21 (figure 2).

Dans l'exemple représenté la tête de distribution 1 est complétée par une duse 26 fixée dans la tête par un dispositif à baïonnette ou par vissage sur la portée 18 et muni de canaux reliant la sortie radiale 17 à un orifice de giclage 27.

Selon les mesures qui ont été effectuées au moyen de manomètres et des observations faites sur une tête 1 transparente, le fonctionnement du réducteur-régulateur de pression semble être le suivant : lorsqu'on ouvre la valve et que le produit sous pression pénètre dans la chambre 19, une partie du produit s'écoule par la fente 24 dans la chambre 21. Cette chambre 21 est fermée au repos de manière étanche par l'appui de la face du piston contre la garniture 13, ce qui a pour conséquence une augmentation de la pression dans cette chambre 21, cette augmentation de pression ayant pour effet de repousser en arrière le double piston 6-7 en comprimant le ressort 12. Simultanément la chambre 21 est mise en communication avec la duse 26 par le canal 16 et le produit peut s'échapper par l'orifice de giclage 27, ce qui a pour effet de faire chuter la pression dans la chambre 21. Le ressort 12 repousse alors le piston 6 vers la gauche, ce qui permet à nouveau à une certaine quantité de produit de passer de la chambre 19 à la chambre 21 par la fente 24, provoquant à nouveau une augmentation de la pression dans la chambre 21, surtout qu'une certaine pression subsiste dans le canal 16, compte tenu de la faible section de l'orifice 27 de la duse. L'augmentation de la pression dans la chambre 21 a à nouveau pour effet de repousser le double piston en arrière. Le double piston 6-7 est ainsi animé d'un mouvement oscillant amorti pour se stabiliser finalement dans une position d'équilibre. Le tarage du ressort 12 permet d'obtenir la réduction de pression désirée.

Il convient de relever que la garniture d'étanchéité 13 n'est pas nécessaire pour le fonctionnement du dispositif, étant donné qu'une augmentation de la pression dans la chambre 21 aura dans tous les cas lieu lorsque la chambre 19 est reliée d'un coup à l'enceinte sous pression, ceci en raison de la résistance offerte à l'écoulement du produit par la buse et ses canaux. La garniture 13 a toutefois pour avantage de fermer l'alésage 5 au repos, c'est-à-dire d'isoler les chambres 19 et 21 de l'extérieur et par conséquent d'éviter une oxydation du produit dont il reste une certaine quantité dans ses chambres. On évite en outre le gouttage du produit après fermeture de la valve.

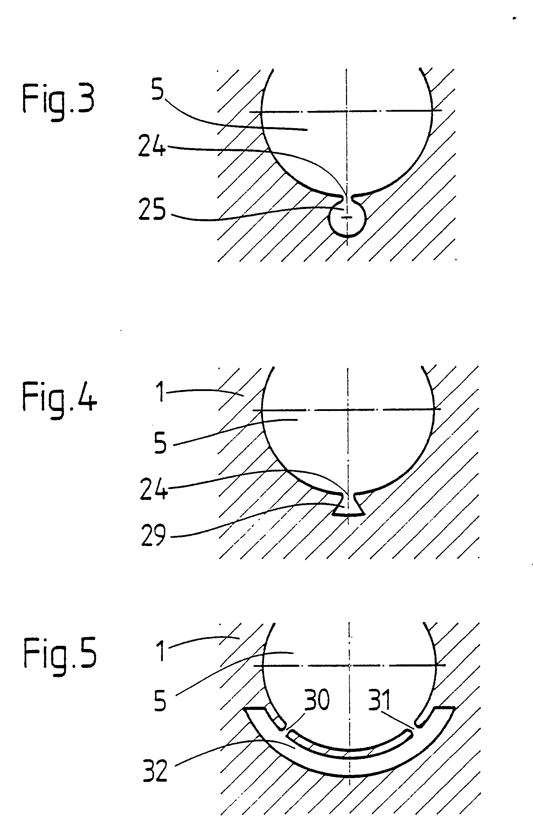

La chambre 25 peut avoir une tout autre forme que celle représentée à la figure 3. La figure 4 représente une variante d'exécution dans laquelle la fente 24 communique avec une cavité 29 en forme de queue d'aronde. Il est également possible de prévoir plusieurs fentes, par exemple deux fentes 30 et 31 (figure 5) communiquant avec une cavité commune 32.

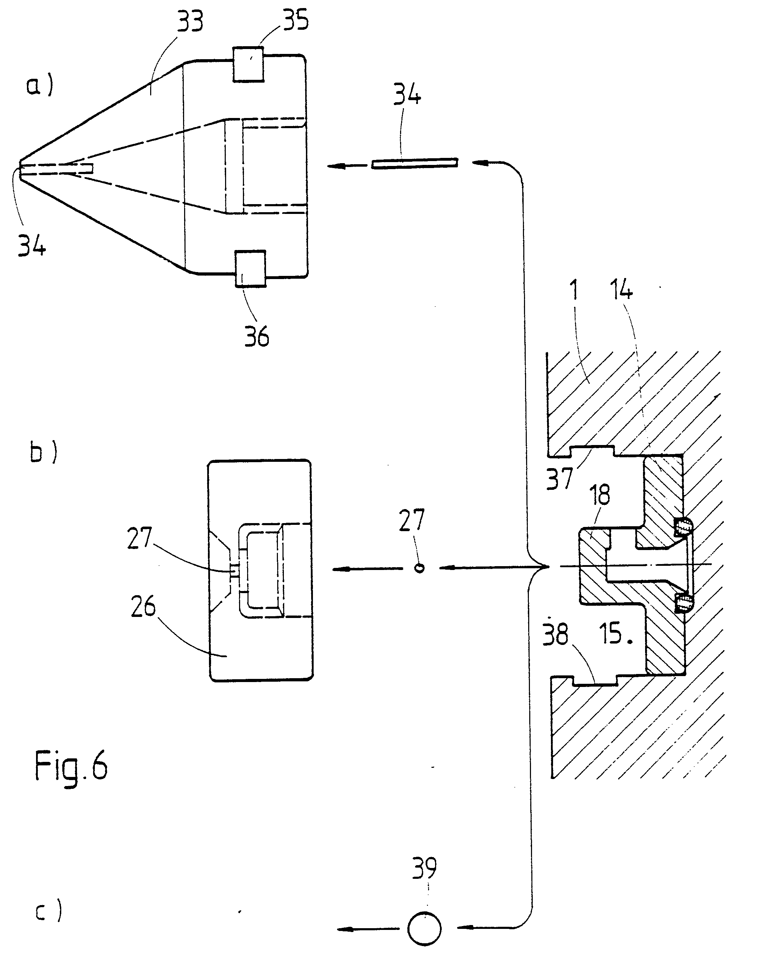

La tête 1, dans l'exécution représentée, permet de fixer des embouts divers comme ceci est illustré par quelques exemples à la figure 6. A la figure 6a est présenté un bec 33 muni à son extrémité d'une fente rectangulaire 34 dont le profil est représenté à droite. Cet embout est muni de deux saillies 35 et 36 destinées à sa fixation à baïonnette dans deux rainures 37 et 38 du logement 15 de la tête. Un tel embout sera utilisé en cas de simple épandage, par exemple pour épandre de la colle, un vernis, une crème ou de la marmelade. La figure 6b représente l'embout 26 de la figure 1 utilisable pour une vaporisation. Cet embout pourra être soit fixé à baïonnette soit vissé sur la portée 18 de la pièce 14. La figure 6c montre simplement la section 39 d'un autre embout de distribution pour d'autres applications. A titre d'exemple on citera les extincteurs à poudre.

Le réducteur-régulateur de pression selon l'invention peut être exécuté en métal ou en matière synthétique.

Si le réducteur-régulateur selon l'invention est utilisé pour réduire la pression d'un réservoir auxiliaire de gaz sous pression utilisé comme gaz propulseur dans un système tel que celui décrit dans le brevet CH-618896, le ressort 12 sera généralement monté entre le piston coopérant avec la fente de sortie côté basse pression et le fond opposé de l'alésage.

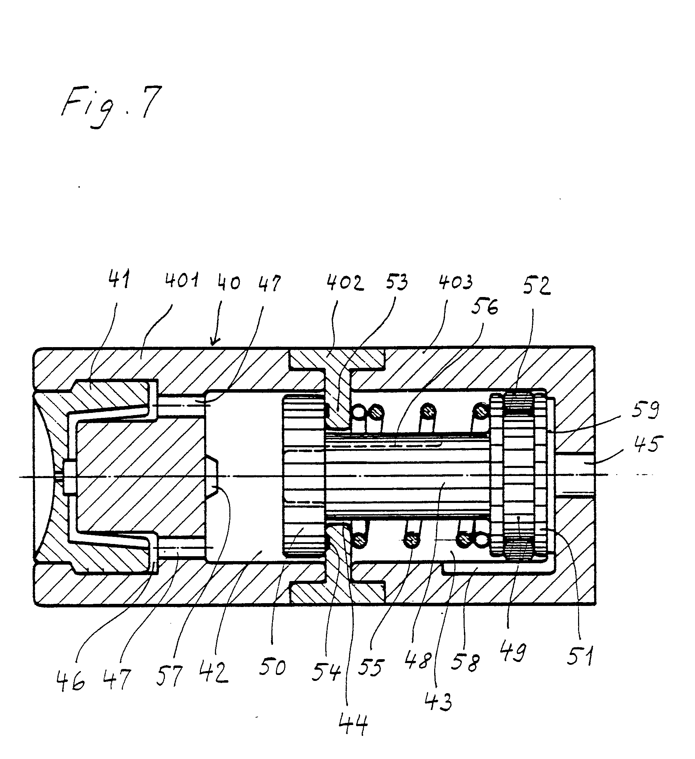

Une variante d'exécution économique, comportant moins de pièces que le dispositif décrit ci-dessus, sera maintenant décrite en relation avec les figures 7 à 9.

La figure 7 montre le dispositif à l'état de repos. Il est composé d'un corps principal 40 constitué de trois parties soudées entre elles 401, 402 et 403 de forme cylindrique qui peuvent être en matière synthétique. Dans ce corps 41 est montée une duse amovible 41, connue en soi et analogue à la duse 26 de la forme d'exécution principale. Le corps principal 40 comprend deux chambres cylindriques 42 et 43 reliées entre elles par un passage central 44, ainsi qu'un orifice axial 45 débouchant dans la chambre 43 constituant l'orifice d'entrée du produit sous haute pression à diffuser. La duse 41 ou pastille de diffusion est logée, selon une conception connue, dans une chambre de diffusion 46 de forme annulaire formée dans le corps principal. Un certain nombre de passages 47 relient la chambre 42 à la chambre de diffusion 46. Un tiroir cylindrique 48 est logé mobile axialement dans les deux chambres 42 et 43. Ce tiroir comporte à l'une de ses extrémités un épaulement cylindrique 49, et à l'autre extrémité un épaulement cylindrique 50 rapporté. L'épaulement 49 est muni d'une rainure annulaire 51 dans laquelle est monté un joint O-RING 52 assurant une étanchéité de la chambre 43 constituant un alésage pour le piston formé par l'épaulement 51 et son segment 52. L'épaulement 50 du tiroir métallique se déplace librement, avec jeu, dans la chambre cylindrique 42. Par sa face tournée du côté du piston, l'épaulement 50 vient buter, au repos, contre un épaulement annulaire 53 formé par la partie médiane 402 du corps 40 et entourant le passage axial 44 entre les chambres. Une garniture d'étanchéité 54 fixée axialement sur la face de l'épaulement 53 en regard de l'épaulement 50 du tiroir garantit une fermeture étanche entre les chambres 42 et 43 au repos, sous l'action d'un ressort 55 travaillant en compression entre l'autre face de l'épaulement 53 et le piston 49 dans la chambre 43. La partie centrale du tiroir 43 présente une saignée 56 parallèle à l'axe assurant un libre passage entre les chambres 43 et 42 lorsque le tiroir se déplace vers la gauche dans le dessin. Le fond de la chambre 42, côté buse, présente un bossage 57 limitant la course du tiroir 48 vers la gauche, de telle sorte que l'épaulement 50 ne vienne pas obturer les passages 47.

A la hauteur du joint O-RING 52 du piston, la paroi de l'alésage 43 présente au moins une saignée longitudinale 58 s'étendant de part et d'autre du joint O-RING 52 au repos. Cette saignée, respectivement ces saignées, peuvent avoir par exemple l'un des profils représentés aux figures 3, 4 et 5.

Dans la position de repos représentée à la figure 7, une étroite chambre 59 est en outre prévue entre le piston 51 et l'orifice d'entrée axial 45. Le fonctionnement de ce dispositif est le suivant :

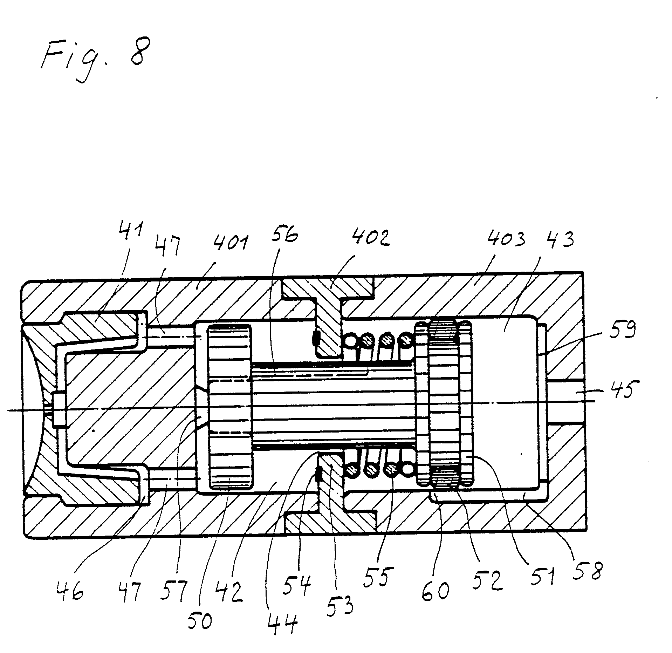

Lorsque le produit, sous haute pression, libéré par une valve conventionnelle non représentée, pénètre par l'orifice d'entrée 45 dans la chambre 59, la saignée 58 de la chambre 43 provoque une restriction de section au passage du produit. Ce dernier exerce alors une pression sur les parois de la chambre 43 et sur la face 60 du piston 49. Cette pression provoque le déplacement du tiroir 48 vers la gauche en comprimant le ressort 55. Le tiroir 48 se déplace jusqu'à venir en butée contre le bossage 57. Dans cette position, il ne subsiste qu'un très faible passage 60 entre l'extrémité de la saignée 58 et le joint O-RING 52 (figure 8). En traversant ce passage 60 pour arriver dans la chambre 43, la pression du produit diminue fortement. Cette chute de pression est proportionnelle à la dimension du passage 60. Or la dimension du passage 60 est fonction de la position du joint O-RING 52 relativement à la saignée 58. Il se crée néanmoins une contre-pression sur l'autre face du piston 49 dans la chambre 43, contre-pression qui, ajoutée à celle du ressort 55, a tendance à repousser le piston 49 vers la droite. Ce piston 49 occupe finalement une position d'équilibre entre les pressions exercées des deux côtés du piston 49.

C'est donc à basse pression que le produit continue son cheminement vers la duse 41 en passant par le passage axial 44, passage facilité par la saignée 56, la chambre 42 et les passages 47.

Lorsque la haute pression du produit diminue à l'entrée du dispositif, suite à une baisse normale de pression dans le réservoir non représenté, la pression à l'entrée du dispositif diminue également et devient finalement inférieure à la contre-pression exercée par le ressort 55 et le produit à basse pression dans la partie gauche de la chambre 43. Le ressort 55 parvient ainsi à repousser le piston 49 vers la droite en agrandissant le passage 60, de telle sorte que le produit passe plus facilement et que la chute de pression à travers ce passage 60 est moins importante.

Lorsque la pression du produit dans la partie gauche de la chambre 43 a suffisamment diminué pour atteindre la valeur minimum de pression de vaporisation, le tiroir 48 reprend approximativement la position représentée à la figure 7, sous l'action du ressort 55.

Dans le cas où la pression diminuerait encore, la vaporisation ne se ferait plus convenablement. Dans ce cas, l'épaulement 50 du tiroir 48 vient s'appuyer contre la garniture d'étanchéité 54 de l'épaulement 53 et fermer la chambre 43, en empêchant le produit de sortir à trop basse pression dans la chambre 42.

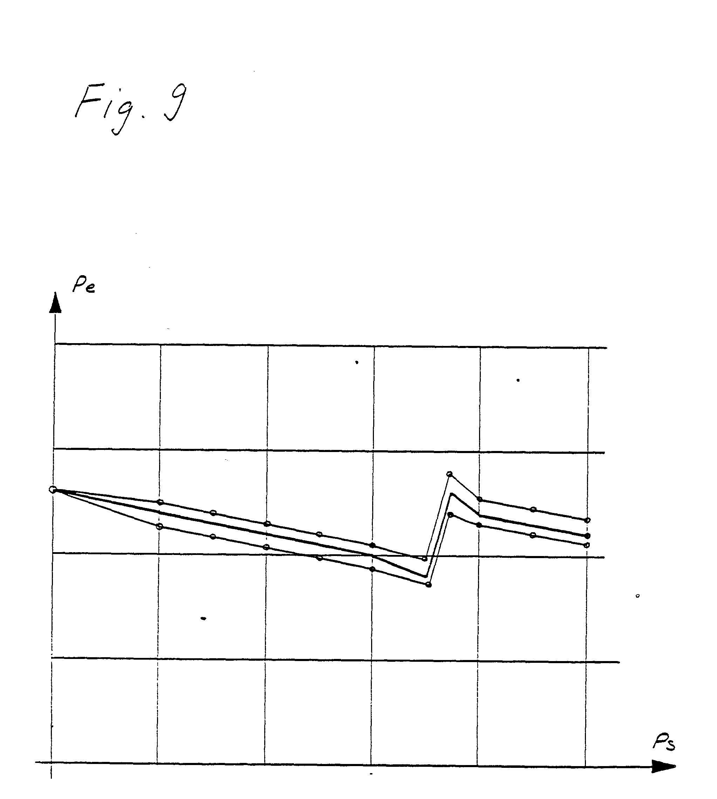

La régulation effectuée par le dispositif décrit ci-dessus est illustrée au moyen du diagramme représenté à la figure 9. En ordonnée est portée la valeur descendante de la pression Pe du produit à l'entrée du dispositif. En abcisse est portée la pression régularisée Ps mesurée dans la chambre de diffusion 46.

## Revendications

1. Réducteur-régulateur de pression pour la distribution d'un produit gazeux, liquide, visqueux, pulvérulent ou pâteux, comprenant une entrée haute pression et une sortie basse pression, un corps (1) muni d'un alésage cylindrique (5) dans lequel sont montés deux pistons (6, 7) rigidement solidaires l'un de l'autre et munis de segments (9, 10) déformables élastiquement et un ressort (12) travaillant en compression entre le fond de l'alésage et l'un des pistons et maintenant, au repos, les pistons en butée contre une butée prévue en face de l'autre piston, l'alésage présentant un premier orifice radial (22) débouchant entre les pistons (6, 7) et relié à la haute pression et un second orifice (24) au niveau du segment (9) de l'un des pistons constituant la sortie basse pression, la chambre (20) formée entre l'autre piston et le fond de l'alésage étant relié à la pression atmosphérique, caractérisé par le fait que l'orifice (24) situé au niveau du segment de l'un des pistons est constitué par au moins une fente longitudinale, la course des pistons en direction du ressort (12) étant limitée par une butée (11), de telle sorte que lorsque le piston correspondant (7) est en butée contre cette butée, le passage entre la chambre centrale (19) et la cavité (25) à travers la fente longitudinale, n'est pas totalement fermé.

2. Réducteur-régulateur de pression selon la revendication 1, caractérisé par le fait qu'il est monté dans une tête de distribution (1) de produits gazeux, liquides visqueux, pulvérulents ou pâteux contenus dans une enceinte sous pression, le ressort (12) étant disposé du côté opposé à l'orifice de sortie (16) et maintenant, au repos, l'autre piston (6) en appui contre une garniture d'étanchéité (13) entourant l'entrée d'un conduit axial (16) se terminant par une duse (27), et délimitant une chambre entre le piston (6) et le corps de la duse (14).

3. Réducteur-régulateur de pression selon la revendication 2, caractérisé par le fait que la fente longitudinale (24), située en face du segment du piston (6) du côté de la duse débouche radialement dans une cavité (25) s'étendant sur toute la longueur de la fente.

4. Réducteur-régulateur de pression selon l'une des revendications 2 ou 3, caractérisé par le fait que la fente longitudinale (24) s'étend, au repos, de part et d'autre du segment du piston.

5. Réducteur-régulateur de pression selon la revendication 4, caractérisé par le fait que la sortie de la tête de distribution est située dans deux pièces distinctes, l'une (14) fixée à demeure dans la tête et portant ladite garniture d'étanchéité (13) et l'autre (26 ; 33) amovible et interchangeable.

6. Réducteur-régulateur de pression pour la distribution d'un produit gazeux, liquide, visqueux, pulvérulent ou pâteux, comprenant une entrée haute pression et une sortie basse pression, un corps (40) muni d'un alésage cylindrique (43) dans lequel est monté un piston (49) muni d'un segment (52) déformable élastiquement et maintenu en position de repos, déterminée par une butée (53), par un ressort (55) travaillant en compression, l'alésage (43) présentant un premier orifice axial (45) débouchant du côté du piston opposé au côté sur lequel agit le ressort (55) et relié à l'entrée haute pression (45), caractérisé par le fait que l'alésage (43) comprend un orifice au niveau du segment (52) du piston constituant la sortie basse pression, cet orifice (58) étant constitué par au moins une saignée longitudinale, ménagée dans la paroi de l'alésage (43) et s'étendant de part et d'autre du segment (52) en position de repos du piston, la course du piston (49) en direction du ressort (55) étant limitée par une butée (57), de telle sorte que lorsque le piston est en butée contre cette butée, le passage à travers la saignée longitudinale (58), n'est pas totalement fermé.

7. Réducteur-régulateur de pression selon la revendication 7, caractérisé par le fait que la butée retenant le piston au repos est constituée par un épaulement annulaire (53) du corps (40) et qu'une garniture d'étanchéité (54) est prévue axialement entre cette butée (53) et un épaulement (50) du piston pour assurer l'étanchéité de l'alésage (43) en position de repos ou position initiale du piston.

## Claims

1. Pressure reducer/regulator for dispensing a gaseous, liquid, viscous, powdery or pasty product, comprising a high-pressure inlet and a low-pressure outlet, a body (1) provided with a cylindrical bore (5), in which are mounted two pistons (6, 7) fixed rigidly to one another and equipped with elastically deformable segments (9, 10), and a spring (12) working under compression between the bottom of the bore and one of the pistons and, at rest, keeping the pistons up against a stop located opposite the other piston, the bore having a first radial port (22) opening out between the pistons (6, 7) and communicating with the high pressure, and a second port (24) in the region of the segment (9) of one of the pistons and forming the low-pressure outlet, the chamber (20) formed between the other piston and the bottom of the bore being connected to the atmospheric pressure, characterized by the fact that the port (24) located in the region of the segment of one of the pistons consists of at least one longitudinal slot, the stroke of the pistons in the direction of the spring (12) being limited by a stop (11), in such a way that, when the corresponding piston (7) is up against this stop, the passage between the central chamber (19) and the cavity (25) through the longitudinal slot (24) is not completely closed.

2. Pressure reducer/regulator according to claim 1, characterized by the fact that it is mounted in a dispensing head (1) for gaseous, liquid, viscous, powdery or pasty products contained in a pressurized vessel, the spring (12) being arranged on the side opposite the outlet port (16) and, at rest, keeping the other piston (16) up against a gasket (13) surrounding the inlet of an axial channel (16) ending in a nozzle (27) and delimiting a chamber between the piston (6) and the body (14) of the nozzle.

3. Pressure reducer/regulator according to claim 2, characterized by the fact that the longitudinal slot (24) located opposite the segment of the piston (6) on the same side as the nozzle opens radially into a cavity (25) extending over the entire length of the slot.

4. Pressure reducer/regulator according to one of claims 2 or 3, characterized by the fact that, at rest, the longitudinal slot (24) extends on either side of the piston segment.

5. Pressure reducer/regulator according to claim 4, characterized by the fact that the outlet of the dispensing head is located in two separate pieces, one (14) being fastened permanently in the head and carrying the said gasket (13) and the other (26 ; 33) being removable and interchangeable.

6. Pressure reducer/regulator for dispensing a gaseous, liquid, viscous, powdery or pasty product, comprising a high-pressure inlet and a low-pressure outlet, a body (40) provided with a cylindrical bore (43), in which is mounted a piston (49) equipped with an elastically deformable segment (52), and maintained by a spring (55) working under compression in the position of rest fixed by a stop (53), the bore (43) having a first axial port (45) opening out on the side of the piston opposite the side on which the spring (55) is acting and communicating with the high-pressure inlet (45), characterized by the fact that the bore (43) has a port in the region of the segment (52) of the piston and forming the low-pressure outlet, this port (58) consisting of at least one longitudinal slit made in the wall of the bore (43) and extending on either side of the segment (52) in the position of rest of the piston, the stroke of the piston (49) in the direction of the spring (55) being limited by a stop (57), in such a way that, when the piston is up against this stop, the· passage through the longitudinal slit (58) is not completely closed.

7. Pressure reducer/regulator according to claim 7, characterized by the fact that the stop retaining the piston at rest consists of an annular shoulder (53) of the body (40), and that a gasket (54) is arranged axially between this stop (53) and a shoulder (50) of the piston, to ensure sealing of the bore (43) in the position of rest or initial position of the piston.

## Patentansprüche

1. Druckreduzierregler zur Verteilung eines gasförmigen, flüssigen, viskosen, pulver- oder pastenförmigen Produkts mit einem Hochdruckeingang und einem Niederdruckausgang, mit einem Körper (1), der mit einer zylindrischen Bohrung (5) versehen ist, in der zwei starr miteinander verbundene und mit elastisch verformbaren Segmenten (9, 10) versehene Kolben (6, 7) montiert sind, und mit einer Feder (12), die zwischen dem Boden der Bohrung und einem der Kolben komprimiert ist und in der Ruhestellung die Kolben gegen einen Anschlag drückt, der dem anderen Kolben gegenüberliegend vorgesehen ist, wobei die Bohrung eine erste radiale Oeffnung (22), die zwischen den Kolben (6, 7) mündet und mit dem Hochdruck verbunden ist, und eine zweite den Niederdruckausgang bildende Oeffnung (24) in Höhe des Segments (9) des einen der Kolben aufweist und wobei die zwischen dem anderen Kolben und dem Boden der Bohrung gebildete Kammer (20) mit dem Athmosphärendruck in Verbindung steht, dadurch gekennzeichnet, dass die Oeffnung (24), die sich in Höhe des Segments des einen der Kolben befindet, aus wenigstens einem Längsspalt besteht und dass der Hub der Kolben in Richtung der Feder (12) durch einen Anschlag (11) begrenzt ist, derart, dass, wenn der entsprechende Kolben (7) an diesem Anschlag anliegt, der Durchgang zwischen der zentralen Kammer (19) und dem Hohlraum (25) quer durch den Längsspalt nicht vollständig geschlossen ist.

2. Druckreduzierregler nach Anspruch 1, dadurch gekennzeichnet, dass er in einem Verteilerkopf (1) für gasförmige, flüssige, viskose, pulver- oder pastenförmige Produkte montiert ist, welche sich in einer Hülle unter Druck befinden, dass die Feder (12) an der der Ausgangsöffnung (16) gegenüberliegenden Seite angeordnet ist und in der Ruhestellung den anderen Kolben (6) gegen eine Dichtungspackung (13) drückt, welche den Eingang einer in einer Düse (27) mündenden axialen Leitung (16) umgibt und eine Kammer zwischen dem Kolben (6) und dem Düsenkörper (14) begrenzt.

3. Druckreduzierregler nach Anspruch 2, dadurch gekennzeichnet, dass der Längsspalt (24), der dem Segment des düsenseitigen Kolbens (6) gegenüberliegt, radial in einen Hohlraum (25) mündet, der sich über die gesamte Länge des Spalts erstreckt.

4. Druckreduzierregler nach einem der Ansprüche 2 oder 3, dadurch gekennzeichnet, dass sich der Längsspalt (24) in der Ruhestellung beiderseits des Segments des Kolbens befindet.

5. Druckreduzierregler nach Anspruch 4, dadurch gekennzeichnet, dass der Ausgang des Verteilerkopfes in zwei verschiedenen Teilen angeordnet ist, von denen ein Teil (14) dauerhaft im Kopf befestigt ist und die erwähnte Dichtungspackung (13) trägt und das andere Teil (26 ; 33) lösbar und austauschbar ist.

6. Druckreduzierregler für die Verteilung eines gasförmigen, flüssigen, viskosen, pulver- oder pastenförmigen Produkts mit einem Hochdruckeingang und einem Niederdruckausgang sowie mit einem Körper (40), der mit einer zylindrischen Bohrung (43) versehen ist, in welcher ein mit einem elastisch verformbaren Segment (52) versehener Kolben (49) montiert ist, der in der durch einen Anschlag (53) bestimmten Ruhestellung von einer auf Kompression arbeitenden Feder (55) gehalten wird, wobei die Bohrung (43) eine erste axiale Oeffnung (45) aufweist, die auf derjenigen Seite des Kolbens mündet, welche der von der Feder (55) beaufschlagten Seite gegenüberliegt, und die an den Hochdruckeingang (45) angeschlossen ist, dadurch gekennzeichnet, dass die Bohrung (43) eine den Niederdruckausgang bildende Oeffnung in Höhe des Segments (42) des Kolbens aufweist, dass diese Oeffnung (58) aus wenigstens einem Längseinschnitt besteht, der in die Wand der Bohrung (43) eingearbeitet ist und sich in der Ruhestellung des Kolbens beiderseits des Segments (52) erstreckt, und dass der Hub des Kolbens (49) in Richtung der Feder (55) durch einen Anschlag (57) derart begrenzt ist, dass, wenn der Kolben am Anschlag anliegt, der Durchgang durch den Längseinschnitt (58) nicht vollständig geschlossen ist.

7. Druckreduzierregler nach Anspruch 6, dadurch gekennzeichnet, dass der Anschlag, der den Kolben in der Ruhestellung hält, aus einer Ringschulter (53) des Körpers (40) besteht und dass eine Dichtungspackung (54) axial zwischen diesem Anschlag (53) und einer Schulter (50) des Kolbens vorgesehen ist, um die Abdichtung der Bohrung (43) in der Ruhestellung oder in der Anfangsstellung des Kolbens zu gewährleisten.

# Fig.1

# Fig. 2

Fig.3

5

24

25

Fig.4

1

5

24

29

Fig.5

1

5

30   31

32

a)

33    35

34

34

36

b)

27

26

27

1    14

37

18

38    15.

Fig.6

39

c)

Fig. 7

Fig. 8

Fig. 9